# EUROPÄISCHE PATENTSCHRIFT

(11) **EP 3 288 822 B1**
(45) Veröffentlichungstag und Bekanntmachung des Hinweises auf die Patenterteilung: **17.06.2020**
(21) Anmeldenummer: 16709367.3
(22) Anmeldetag: 09.03.2016
(51) Int. Cl.: B62J 17/00

(54) **VERKLEIDUNG FÜR MOTORRÄDER ODER MOTORROLLER**
TRIM FOR MOTORCYCLES OR MOTOR SCOOTERS
HABILLAGE POUR MOTOS OU SCOOTERS

(30) Priorität: 28.04.2015 DE 102015207720
(43) Veröffentlichungstag der Anmeldung: 07.03.2018
(73) Patentinhaber: Bayerische Motoren Werke Aktiengesellschaft, 80809 München (DE)
(72) Erfinder: DRESSLER, Matthias, 80993 Muenchen (DE); STRASSER, Dieter, 82386 Oberhausen (DE)
(86) Internationale Anmeldenummer: PCT/EP2016/054969
(87) Internationale Veröffentlichungsnummer: WO 2016/173754

(56) Entgegenhaltungen:
- EP-A1- 2 530 001
- WO-A2-2010/137038
- CN-C- 1 123 473
- CN-Y- 201 049 684
- JP-A- H1 045 078
- JP-A- H02 279 482
- JP-A- 2002 178 975
- JP-A- 2007 008 276
- US-A- 4 715 465

## Beschreibung

Die Erfindung betrifft eine Verkleidung, die toleranzunempfindlich an Motorrädern oder Motorrollern verbaut wird und dabei geringe Spaltmaße im Sichtbereich realisiert.

Ein Fahrzeug mit einem Verkleidungsteil gemäß dem technischen Gebiet der Erfindung ist bereits aus der WO 2010/137038 A2, der US 4 715 465 A, der CN 1 123 473 C, der EP 2 530 001 A1, der JP 2007 008276 A, der JP H02 279482 A, der JP H10 45078 A, der JP 2002 178975 A und der CN 201 049 684 Y bekannt.

Bei derzeitigen Motorrad- und Motorrollerkonstruktionen wird im Frontbereich häufig eine Stahl- oder Alu-Schweißkonstruktion als tragende Struktur eingesetzt, an die Sichtteile wie Scheinwerfer oder Verkleidungsteile befestigt werden. Bedingt durch die vergleichsweise großen Toleranzen der Schweißkonstruktion kommt es insbesondere im Bereich der Bauteilübergänge und Fugen leicht zu einem ungleichmäßigen Erscheinungsbild der montierten Verkleidungsteile und einer erschwerten Montage.

Dabei ist ferner nachteilig, dass sich die großen Toleranzen der Schweißkonstruktion auf sichtbare Bereiche auswirken und einen schlechten Qualitätseindruck erwecken. Zum Toleranzausgleich ist deshalb entsprechend viel Verschiebeweg an den Befestigungspunkten vorzusehen. Hierfür werden im Stand der Technik häufig Langlöcher eingesetzt, die jedoch Nachteile bei der Flächenpressung unter dem Schraubenkopf mit sich bringen. Ferner sind zum Toleranzausgleich vergleichsweise große Fugen notwendig. Das widerspricht jedoch dem Wunsch nach möglichst kleinen Fugen, um einen möglichst hohen Qualitätseindruck zu erreichen.

Vor diesem Hintergrund ist es Aufgabe der Erfindung, eine Verkleidung bereit zu stellen, deren Verkleidungsteile mit möglichst geringen Fugen aneinander anliegen und die leicht zu montieren ist.

Die Aufgabe wird gelöst durch die Merkmalskombination gemäß Patentanspruch 1.

Erfindungsgemäß wird eine Verkleidung vorgeschlagen, die gebildet ist aus mehreren Verkleidungsteilen, die jeweils Ausrichtungsmittel aufweisen, über welche die Verkleidungsteile zueinander in eine vorbestimmte Positionen ausgerichtet sind und dabei zumindest über die Ausrichtungsmittel aneinander befestigt eine Verkleidungseinheit bilden. Hierbei ist an mindestens einem der Verkleidungsteile ein Hauptbefestigungsmittel vorgesehen, das ausgebildet ist, die Verkleidungseinheit als Ganzes mit bereits zueinander ausgerichteten Verkleidungsteilen an einer Tragkonstruktion des Motorrads oder Motorrollers zu befestigen. Erfindungsgemäß ist bei der an einem ersten Verkleidungsteil das Ausrichtungsmittel einteilig als Halteklammer mit einem seitlichen Klammereingriff ausgebildet, in den ein an einem zweiten Verkleidungsteil ausgebildeter Bolzen eingreift. Die Halteklammer und der Bolzen erzeugen dabei eine Verbindung, die zwei Freiheitsgrade zwischen dem ersten und dem zweiten Verkleidungsteil ausschließt, wobei das erste und das zweite Verkleidungsteil zueinander beweglich und über den Bolzen drehbar gelagert sind.

Dies bedingt eine Kippbarkeit des ersten Verkleidungsteils gegenüber dem zweiten Verkleidungsteil, ermöglicht aber gleichzeitig eine Befestigung zueinander.

Die Ausrichtung der Verkleidungsteile erfolgt unabhängig von der Befestigung an der Tragkonstruktion, d.h. die Ausrichtung wird von der Befestigung entkoppelt. Die einzelnen Verkleidungsteile sind ausschließlich aneinander und zueinander ausgerichtet. Die Tragkonstruktion übernimmt nur die Haltefunktion ohne die Verkleidungsteile in ihrer Ausrichtung zu beeinflussen. Hierdurch können kleine Fugen zwischen den Verkleidungsteilen verwirklicht werden können.

Bei der konzeptionellen Auslegung der Verkleidungsteile müssen lediglich deren Bauteiltoleranzen berücksichtigt werden, die Toleranzen des Verkleidungshalters, d.h. der Tragstruktur des Motorrades oder Motorrollers sind nicht mehr erfassbar.

In vorteilhafter Weise können die Spalten und Fugen zwischen den Verkleidungsteilen erfindungsgemäß klein ausgelegt werden. Zudem wird der Qualitätseindruck durch engere, gleichmäßigere Fugen verbessert.

Bezüglich der Montage ist günstig, dass die Verkleidungsteile zunächst zur Verkleidungseinheit zusammengefasst und zueinander ausgerichtet sind, wobei bereits eine gewisse Selbstausrichtung erfolgen kann. Die Verkleidungseinheit kann anschließend leicht über das Hauptbefestigungsmittel an der Tragstruktur fixiert werden.

In einer vorteilhafter Ausführungsform ist vorgesehen, dass die Verkleidungseinheit gebildet wird aus mindestens dem ersten Verkleidungsteil, dem zweiten Verkleidungsteil und einem dritten Verkleidungsteil, deren Ausrichtungsmittel derart zueinander angeordnet sind, dass eine theoretische Verbindungslinie zwischen den Ausrichtungsmitteln ein Dreieck bildet. Die Zuordnung im Dreieck begünstigt die selbstausrichtende Wirkung der zunächst schwimmend einander zugeordneten Verkleidungsteile.

An dem zweiten und dritten Verkleidungsteil sind in einer Ausführungsvariante als Ausrichtungsmittel Ausrichtpins ausgebildet, die in komplementäre Aufnahmen an den jeweils angrenzenden Verkleidungsteilen eingreifen. Die Ausrichtpins werden mit an die vorzugsweise aus Kunststoff gebildeten Verkleidungsteile angespritzt und verbinden die Verkleidungsteile an vorbestimmten Positionen. Insbesondere stellen die Ausrichtpins zwei der drei Aufnahmepunkte des oben beschriebenen Dreiecks.

Die Verkleidungsteile weisen jeweils eine Sichtseite und eine Rückseite auf. Die Ausrichtung erfolgt erfindungsgemäß in der Weise, dass die Verkleidungsteile zueinander bezüglich ihrer Sichtseite ausgerichtet sind.

Ferner ist vorgesehen, dass das Hauptbefestigungsmittel vorzugsweise als Schraubenaufnahme zur Verschraubung der Verkleidungseinheit an der Tragkonstruktion des Motorrads oder Motorrollers ausgebildet ist, wobei die Schraubenaufnahme eine vergrößerte Öffnungsweite, beispielsweise in Form eines Langloches oder Loches mit übergroßem Durchmesser aufweist, um die Verkleidungseinheit versetzt befestigen zu können.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

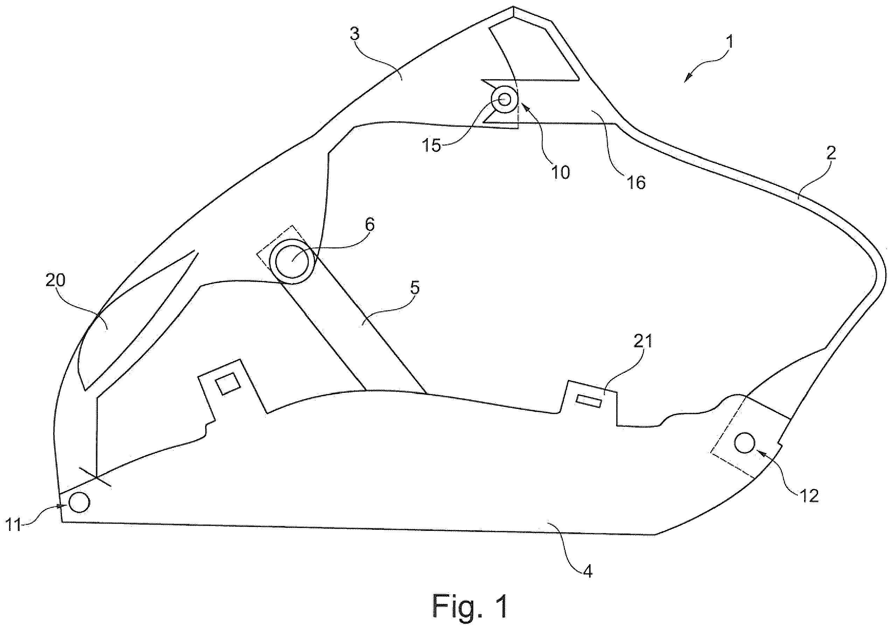

- Fig. 1: eine schematische Seitendarstellung einer Verkleidungseinheit an einer Tragstruktur eines Motorrollers.

In Figur 1 ist beispielhaft schematisch eine Verkleidung 1 mit einem ersten Verkleidungselement 2, einem zweiten, einen Frontscheinwerfer 20 eines Motorrollers tragenden Verkleidungselement 3 und einem dritten Verkleidungselement 4 in einer Seitenansicht dargestellt, die zusammen eine Verkleidungseinheit bilden. An dem ersten Verkleidungselement 2 ist einteilig die Halteklammer 16 mit einem seitlichen Klammereingriff 10 angeformt, in den ein an dem zweiten Verkleidungselement 3 ausgebildeter Bolzen 15 eingreift. Das erste und zweite Verkleidungselement 2, 3 sind zueinander beweglich und über den Bolzen 15 drehbar gelagert.

An dem zweiten Verkleidungselement 3 ist ein Ausrichtpin 11, an dem dritten Verkleidungselement 4 ein Ausrichtpin 12 angeformt, über welche das zweite und dritte Verkleidungselement 3, 4 zueinander ausgerichtet und beweglich befestigt sind. Eine gedachte Verbindung zwischen den Verbindungsstellen Bolzen 15, Ausrichtpin 11 und Ausrichtpin 12 bildet ein Dreieck, über das die Verkleidungsteile 2, 3, 4 mit jeweils zueinander weisenden Flächen ausgerichtet werden. Erst im Anschluss wird diese Verkleidungseinheit über das als Schraube ausgebildete Hauptbefestigungsmittel 6 an der Tragstruktur 5 des Motorrollers befestigt.

An dem dritten Verkleidungsteil 4 sind zudem noch Aufnahmen 21 ausgebildet, in die weitere Verkleidungsteile oder andere Komponenten befestigbar sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können anstelle von Ausrichtpins auch andere Ausrichtmittel mit vergleichbarer Funktion verwendet werden.

## Patentansprüche

1. Verkleidung für ein Motorrad oder einen Motorroller gebildet aus mehreren Verkleidungsteilen (2, 3, 4), die jeweils Ausrichtungsmittel aufweisen, über welche die Verkleidungsteile (2, 3, 4) zueinander in eine vorbestimmte Positionen ausgerichtet sind und dabei zumindest über die Ausrichtungsmittel aneinander befestigt eine Verkleidungseinheit bilden, wobei an mindestens einem ersten der Verkleidungsteile ein Hauptbefestigungsmittel (6) vorgesehen ist, das ausgebildet ist, die Verkleidungseinheit als Ganzes mit bereits zueinander ausgerichteten Verkleidungsteilen (2, 3, 4) an einer Tragkonstruktion (5) des Motorrads oder Motorrollers zu befestigen, **dadurch gekennzeichnet, dass** an dem ersten Verkleidungsteil (2) das Ausrichtungsmittel einteilig als Halteklammer(16) mit einem seitlichen Klammereingriff (10) ausgebildet ist, in den ein an einem zweiten Verkleidungsteil (3) ausgebildeter Bolzen (15) eingreift, und wobei
die Halteklammer (16) und der Bolzen (15) eine Verbindung erzeugen, die zwei Freiheitsgrade zwischen dem ersten und dem zweiten Verkleidungsteil (2, 3) ausschließt, wobei
das erste und zweite Verkleidungsteil (2, 3) zueinander beweglich und über den Bolzen (15) drehbar gelagert sind.

2. Verkleidung nach Anspruch 1, **dadurch gekennzeichnet, dass** die Verkleidungseinheit gebildet wird aus mindestens dem ersten Verkleidungsteil (2), dem zweiten Verkleidungsteil (3) und einem dritten Verkleidungsteil (4), deren Ausrichtungsmittel derart zueinander angeordnet sind, dass eine theoretische Verbindungslinie zwischen den Ausrichtungsmitteln ein Dreieck bildet.

3. Verkleidung nach Anspruch 1, **dadurch gekennzeichnet, dass** an dem zweiten und dritten Verkleidungsteil (3, 4) als Ausrichtungsmittel Ausrichtpins (11, 12) ausgebildet sind, die in komplementäre Aufnahmen an den jeweils angrenzenden Verkleidungsteilen eingreifen.

4. Verkleidung nach zumindest einem der vorigen Ansprüche, **dadurch gekennzeichnet, dass** die Verkleidungsteile (2, 3, 4) jeweils eine Sichtseite aufweisen und die Verkleidungsteile (2, 3, 4) zueinander in die vorbestimmte Positionen bezüglich ihrer Sichtseite ausgerichtet sind.

5. Verkleidung nach zumindest einem der vorigen Ansprüche, **dadurch gekennzeichnet, dass** das Hauptbefestigungsmittel (6) als Schraubenaufnahme zur Verschraubung der Verkleidungseinheit an der Tragkonstruktion (5) des Motorrads oder Motorrollers ausgebildet ist, wobei die Schraubenaufnahme eine vergrößerte Öffnungsweite aufweist, um die Verkleidungseinheit versetzt befestigen zu können.

## Claims

1. Trim panel for a motorcycle or a motor scooter formed from a plurality of trim parts (2, 3, 4) which in each case have aligning means, via which the trim parts (2, 3, 4) can be aligned with respect to one another into a predefined position and, fastened to one another here at least via the aligning means, form a trim unit, a main fastening means (6) being provided on at least a first one of the trim parts, which main fastening means (6) is configured to fasten the trim unit as a whole with trim parts (2, 3, 4) which have already been aligned with respect to one another to a support structure (5) of the motorcycle or motor scooter, **characterized in that**, on the first trim part (2), the aligning means is configured in one piece as a retaining clip (16) with a lateral clip engagement means (10), into which a stud (15) which is configured on a second trim part (3) engages, and the retaining clip (16) and the stud (15) producing a connection which eliminates two degrees of freedom between the first and the second trim part (2, 3), the first and second trim part (2, 3) being mounted such that they can be moved with respect to one another and can be rotated via the stud (15).

2. Trim panel according to Claim 1, **characterized in that** the trim unit is formed from at least the first trim part (2), the second trim part (3) and a third trim part (4), the aligning means of which are arranged with respect to one another in such a way that a theoretical connecting line between the aligning means forms a triangle.

3. Trim panel according to Claim 1, **characterized in that** aligning pins (11, 12) are configured as aligning means on the second and third trim part (3, 4), which aligning pins (11, 12) engage into complementary receptacles on the respective adjoining trim parts.

4. Trim panel according to at least one of the preceding claims, **characterized in that** the trim panels (2, 3, 4) in each case have a visible side, and the trim parts (2, 3, 4) are aligned with respect to one another into the predefined position with regard to their visible side.

5. Trim panel according to at least one of the preceding claims, **characterized in that** the main fastening means (6) is configured as a screw receptacle for the screw connection of the trim unit on the support structure (5) of the motorcycle or motor scooter, the screw receptacle having an enlarged opening width, in order for it to be possible for a trim unit to be fastened in an offset manner.

## Revendications

1. Habillage pour une motocyclette ou un vélomoteur, constitué de plusieurs parties d'habillage (2, 3, 4) qui possèdent respectivement des moyens d'orientation par le biais desquelles les parties d'habillage (2, 3, 4) sont orientées les unes par rapport aux autres dans une position prédéterminée et, en étant fixées les unes contre les autres au moins par le biais des moyens d'orientation, forment ainsi une unité d'habillage, un moyen de fixation principal (6) se trouvant sur au moins une première des parties d'habillage, lequel est configuré pour fixer la partie d'habillage en tant qu'ensemble avec des parties d'habillage (2, 3, 4) déjà orientées les unes par rapport aux autres à une construction porteuse (5) de la motocyclette ou du vélomoteur, **caractérisé en ce que** sur la première partie d'habillage (2), le moyen d'orientation est réalisé d'un seul tenant sous la forme d'une bride de maintien (16) pourvue d'une prise de bride (10) latérale dans laquelle vient en prise un goujon (15) formé sur une deuxième partie d'habillage (3), et
la bride de maintien (16) et le goujon (15) produisant une liaison qui exclut deux degrés de liberté entre la première et la deuxième partie d'habillage (2, 3),
la première et la deuxième partie d'habillage (2, 3) étant montées mobiles l'une par rapport à l'autre et pivotantes par le biais du goujon (15).

2. Habillage selon la revendication 1, **caractérisé en ce que** l'unité d'habillage est formée par au moins la première partie d'habillage (2), la deuxième partie d'habillage (3) et une troisième partie d'habillage (4), dont les moyens d'orientation sont disposés les uns par rapport aux autres de telle sorte qu'une ligne de liaison théorique entre les moyens d'orientation forme un triangle.

3. Habillage selon la revendication 1, **caractérisé en ce que** les moyens d'orientation sur la deuxième et la troisième partie d'habillage (3, 4) sont réalisés sous la forme de broches d'orientation (11, 12) qui viennent en prise dans des logements complémentaires sur les parties d'habillage respectivement adjacentes.

4. Habillage selon au moins l'une des revendications précédentes, **caractérisé en ce que** les parties d'habillage (2, 3, 4) possèdent respectivement un côté visible et les parties d'habillage (2, 3, 4) sont orientées les unes par rapport aux autres dans la position prédéterminée en référence à leur côté visible.

5. Habillage selon au moins l'une des revendications précédentes, **caractérisé en ce que** le moyen de fixation principal (6) est réalisé sous la forme d'un logement de vis servant au vissage de l'unité d'habillage à la construction porteuse (5) de la motocyclette ou du vélomoteur, le logement de vis possédant une taille d'ouverture agrandie afin de pouvoir fixer l'unité d'habillage de manière décalée.
